**Europäisches Patentamt**

**European Patent Office**

**Office européen des brevets**

(19)

(11) Veröffentlichungsnummer: **0 225 500**
**B1**

(12) **EUROPÄISCHE PATENTSCHRIFT**

(45) Veröffentlichungstag der Patentschrift:
13.06.90

(51) Int. Cl.⁵: **B29C 47/06, B32B 31/30,**
**B32B 27/30**

(21) Anmeldenummer: **86115626.3**

(22) Anmeldetag: **11.11.86**

(54) Verfahren zur Herstellung von Verbundplatten.

(30) Priorität: **14.11.85 AT 3315/85**

(43) Veröffentlichungstag der Anmeldung:
**16.06.87 Patentblatt 87/25**

(45) Bekanntmachung des Hinweises auf die Patenterteilung:
**13.06.90 Patentblatt 90/24**

(84) Benannte Vertragsstaaten:
**BE CH DE ES FR GB GR IT LI LU NL SE**

(56) Entgegenhaltungen:
**EP-A- 0 099 455**
**EP-A- 0 151 812**
**FR-A- 2 200 109**
**FR-A- 2 352 668**

(73) Patentinhaber: **Senoplast Klepsch & Co., Nr. 511,**
**A-5710 Kaprun(AT)**

(72) Erfinder: **Klepsch, Wilhelm, Dipl.-Ing.,**
**Rosbachstrasse 563, A-5710 Kaprun(AT)**

(74) Vertreter: **Hofinger, Engelbert et al, Torggler-Hofinger**
**Wilhelm-Greil-Strasse 16, A-6020 Innsbruck(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf ein Verfahren zur Herstellung von Verbundplatten, aus denen durch Tiefziehen Badewanneneinsätze herstellbar sind, wobei eine Unterlage aus Acrylnitril-Butadien-Styrol (ABS) und ein unmittelbar daran anschließender Überzug aus Polymethylmethacrylat (PMMA, Acrylglas) durch eine Breitschlitzdüse koextrudiert werden.

Soweit bisher derartige Verfahren bekannt geworden sind (vgl. FR-A 2 200 109) wurden die zu kombinierenden Werkstoffe jeweils zunächst zusammengeführt und miteinander verbunden und anschließend gemeinsam einer Kalibriereinrichtung zugeführt und durch deren Breitschlitzdüse ausgepreßt. Das bereitet solange keine Schwierigkeiten, als die zu verbindenden Materialien bei gegebener Temperatur vergleichbare Viskositäten aufweisen. Dies ist für das Stoffpaar ABS/Acrylglas beispielsweise dann gegeben, wenn der Schmelzindex MFI 230°C/3,8, gemessen nach DIN 53735, einen Wert von etwa 6 aufweist.

Eine Untersuchung der Lebensdauer von Badewannen, die durch Tiefziehen auf herkömmliche Weise hergestellter Platten erzeugt worden waren, zeigte, daß nach etwa 500 Heiß-Kaltwasserzyklen die ersten Haarrisse in der Acrylglasoberfläche sichtbar wurden. Dieser Wert genügt nur bescheidenen Anforderungen, und es stellte sich die Aufgabe, die Zahl der abwechselnden Heiß- und Kaltwasserfüllungen, denen eine Wanne ohne sichtbare Schäden unterworfen werden kann, wesentlich zu erhöhen.

Überraschenderweise stellte sich heraus, daß die wesentliche Voraussetzung für die Erreichung des gestellten Zieles die Verwendung von Acrylglas mit einem relativ geringen Schmelzindex ist.

Die gefundene Lösung war zunächst deshalb nicht naheliegend, weil zur Koextrusion mit ABS geeignete Acrylglassorten sich in ihren bekannten mechanischen Eigenschaften, also in der Biegefestigkeit, Zugfestigkeit, Schlagzähigkeit, Kugeldruckhärte und Ritzhärte, auch dann nur geringfügig unterscheiden, wenn der Schmelzindex MFI stark verschieden ist. Es bestand daher zunächst gar kein Anlaß, eine Verbesserung der Lebensdauer von Badewannen durch Übergang zu Acrylglassorten mit niedrigerem Schmelzindex MFI zu suchen. Diesbezüglichen Versuchen stand überdies die Tatsache entgegen, daß mit herkömmlichen Verfahren die Koextrusion von Acrylgläsern mit niedrigem Schmelzindex und ABS nicht möglich ist. Um die notwendigen Versuche durchführen zu können, mußte somit erst ein Weg gefunden werden, die interessierenden Stoffpaare zu koextrudieren, wofür sich schließlich die Verwendung einer Mehrkanaldüse als brauchbar herausstellte. Überraschenderweise ergaben die durchgeführten Versuche, daß mit einer Verringerung des Schmelzindex unter einen Wert von etwa 2 ein sprunghafter Anstieg in der Lebensdauer von Badewannen zu erzielen ist, welche aus den Verbundplatten der beschriebenen Art hergestellt sind. Die Lösung der der Erfindung zugrundeliegenden Aufgabe liegt somit darin, daß das den Überzug bildende Acrylglas einen Schmelzindex MFI·230°C/3,8 nach DIN 53735 von höchstens 2,0 aufweist und daß das Acrylglas und das die Unterlage bildende ABS durch verschiedene Kanäle, deren Breite etwa jener der Breitschlitzdüse entspricht, unmittelbar vor dem Eingang der Breitschlitzdüse zusammengeführt werden.

Einzelheiten der Erfindung werden anschließend anhand der Zeichnungen näher erläutert.

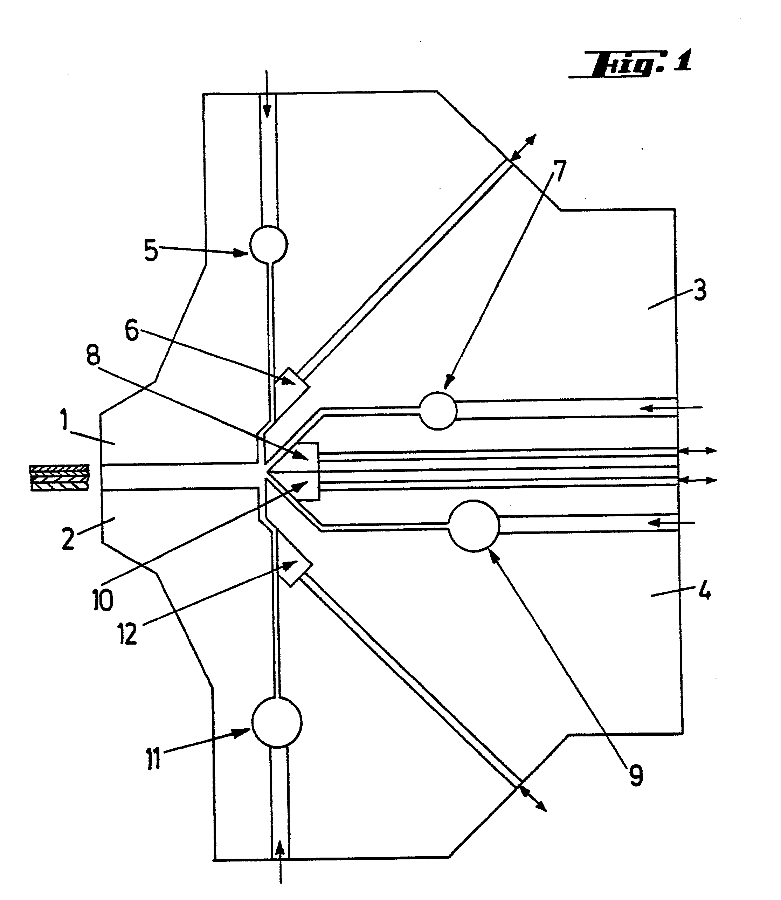

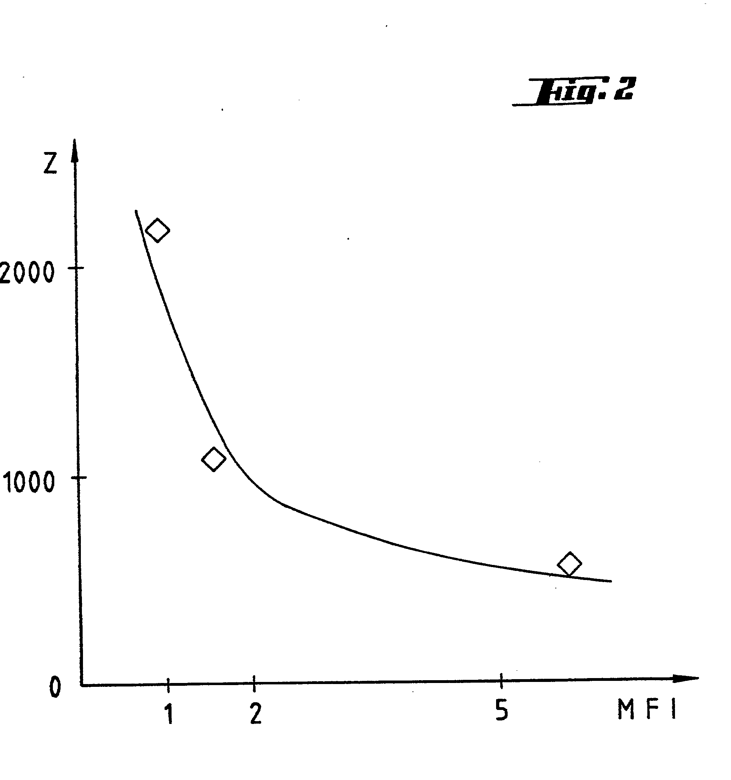

Fig. 1 stellt schematisch eine Einrichtung zur Durchführung des erfindungsgemäßen Verfahrens dar, Fig. 2 ist ein Diagramm, aus welchem die Haltbarkeit von Badewannen in Abhängigkeit vom Schmelzindex des verwendeten Acrylglases hervorgeht.

Die in Fig. 1 dargestellte Einrichtung ist ein sogenanntes Mehrkanaldüsengerät. Typisch hierfür ist, daß das Material, welches eine Schicht eines Verbundkörpers bilden soll, zunächst in Breite und Dicke festgelegt und erst unmittelbar im Bereich der Auspreßdüse mit anderen derartigen Schichten vereinigt wird. Die übliche Vorgangsweise besteht hingegen darin, die einzelnen Lagen aus verschiedenen Kunststoffen bereits vor der Düse zusammenzuführen und gemeinsam durch diese zu verpressen.

Die schematisch dargestellten wesentlichen Teile der Einrichtung nach Fig. 1 sind Oberlippe 1 und Unterlippe 2 einer Breitschlitzdüse sowie ein oberer Düsenkörper 3 und ein unterer Düsenkörper 4, in denen eine Reihe von Verteilerkanälen angeordnet sind. Im dargestellten Fall wird ein Verbundkörper aus vier Schichten, einer Deckschicht, einer oberen Zwischenschicht, einer unteren Zwischenschicht und einer Trägerschicht, hergestellt, welche in dieser Reihenfolge in den Verteilerkanälen 5,7,9 und 11 gebildet werden. Das eine Schicht bildende Material wird also jeweils durch einen Anschluß zugeführt, im Inneren des Düsenkörpers etwa auf die Breite des Verbundkörpers gebracht und in seiner Dicke durch einen Staubalken bestimmt, welcher sich über die Breite der einzeln zugeführten Materialbahnen erstreckt. Den Verteilerkanälen 5,7,9 und 11 sind dabei die Staubalken 6,8,10 und 12 in dieser Reihenfolge zugeordnet.

Wesentlich für die Erfindung ist, daß die in den einzelnen Verteilerkanälen erzeugten Teilbahnen erst unmittelbar am Eingang der Düse, welche aus Oberlippe 1 und Unterlippe 2 besteht, zusammengeführt werden, wodurch ihr unterschiedliches rheologisches Verhalten ohne nachteilige Auswirkungen bleibt.

Die Unterschiede im rheologischen Verhalten der einzelnen Materialien, welche zur Herstellung von Verbundkörpern für die Formung von Badewannen dienen, sind insbesondere dann erheblich, wenn auf der Grundlage einer oder mehrerer Schichten von ABS ein Überzug von Acrylglas aufgebracht werden soll, wobei das Acrylglas einen relativ niedrigen Schmelzindex aufweist. Bei einer solchen Stoffpaarung ist eine Koextrusion in Form von breiten und dicken Platten überhaupt nur sinnvoll möglich, wenn der Aufbau der Schichten sofort nach deren Zusammenführung durch das Einwirken fester äußerer Wände, nämlich der Wände der Breitschlitzdüse, fixiert wird. Welchen Vorteil andererseits die Verwendung von Acrylglas mit niedrigem Schmelzindex bietet, ergibt sich aus Fig. 2. Die Ordinate dieses Diagramms bildet die Zahl der Füllungszyklen mit heißem und kaltem Wasser, denen eine Badewanne nach den einschlägigen CEN-Vorschriften unterworfen werden kann, bis die ersten feinen Haarrisse erkennbar werden. Die Badewanne wird bei einem derartigen Test abwechselnd mit Heißwasser von 95°C und Kaltwasser von 12°C gefüllt, wobei die Versuchsbedingungen genau vorgeschrieben sind.

Das Überraschende an dem in Fig. 2 wiedergegebenen Diagramm liegt darin, daß die Widerstandsfähigkeit von Badewannen gegenüber periodisch wechselnden Heiß-Kalt-Belastungen auffallend zunimmt, wenn der Schmelzindex der auf der Trägerschicht aus ABS aufgebrachten Deckschicht aus Acrylglas unter 2 sinkt, wobei der Optimalwert in Hinblick auf eine noch problemlose Verarbeitbarkeit be etwa 1 liegt. Die Bestimmung des Schmelzindex erfolgt dabei nach der Norm DIN 53735, wobei der Schmelzindex diejenige Masse einer Probe angibt, die in einer bestimmten Zeit unter festgelegten Bedingungen durch eine Düse gedrückt wird. Im vorliegenden Fall wurde der Schmelzindex MFI 230°C|3,8 bestimmt, was bedeutet, daß sich das Prüfgerät auf der Temperatur von 230°C befand und das geprüfte Material unter der Last einer Masse von 3,80 ± 0,02 kg stand.

Wie erwähnt, ist die starke Abhängigkeit der Widerstandsfähigkeit einer Badewanne gegenüber abwechselnder Beschickung mit kaltem und warmem Wasser ausgerechnet vom Schmelzindex insofern überraschend, als die üblichen mechanischen Kennwerte des Materials keine derartige Abhängigkeit zeigen.

## Patentansprüche

1. Verfahren zur Herstellung von Verbundplatten, aus denen durch Tiefziehen Badewanneneinsätze herstellbar sind, wobei eine Unterlage aus Acrylnitril-Butadien-Styrol (ABS) und ein unmittelbar daran anschließender Überzug aus Polymethylmethacrylat (PMMA, Acrylglas) durch eine Breitschlitzdüse koextrudiert werden, dadurch gekennzeichnet, daß das den Überzug bildende Acrylglas einen Schmelzindex MFI 230°C/3,8 nach DIN 53735 von höchstens 2,0 aufweist und daß das Acrylglas und das die Unterlage bildende ABS durch verschiedene Kanäle, deren Breite etwa jener der Breitschlitzdüse entspricht, unmittelbar vor dem Eingang der Breitschlitzdüse zusammengeführt werden.

2. Verfahren nach Anspruch 1, dadurch gekennzeichnet, daß der Schmelzindex des Acrylglases etwa 1 ist.

## Claims

1. A process for the production of composite plates from which bath tub inserts can be made by deep drawing, wherein a support of acrylonitrile-butadiene-styrene (ABS) and a coating directly adjoining same of polymethylmethacrylate (PMMA, acrylic glass) are co-extruded through a wide-slot nozzle, characterised in that the acrylic glass forming the coating has a melting index MFI 230°C/3.8 in accordance with DIN 53735 of a most 2.0 and that the acrylic glass and the ABS forming the support are brought together directly before the intake of the wide-slot nozzle through different passages, the width of which approximately corresponds to that of the wide-slot nozzle.

2. A process according to claim 1 characterised in that the melting index of the acrylic glass is about 1.

## Revendications

1. Procédé de fabrication de panneaux composites permettant par emboutissage de réaliser des inserts pour baignoires, une base en styrène-acrylo-nitrile-butadiène (ABS) et un revêtement en polyméthacrylate de méthyle (PMMA, verre acrylique) appliqué directement sur ladite base étant coextrudés par une filière plate, caractérisé en ce que le verre acrylique formant le revêtement présente un indice de fusion MFI 230°C/3,8 selon la norme DIN 53735 de 2,0 au plus et en ce que le verre acrylique et l'ABS formant la base sont réunis directement avant l'entrée de la filière plate par différents canaux dont la largeur correspond à peu près à celle de la filière plate.

2. Procédé selon la revendication 1, caractérisé en ce que l'indice de fusion du verre acrylique est à peu près égal à 1.

Fig. 1

_Fig. 2_